# FASCICULE DE BREVET EUROPEEN

(11) **EP 0 375 545 B1**
(45) Date de publication et mention de la délivrance du brevet: **08.02.1995**
(21) Numéro de dépôt: 89403569.0
(22) Date de dépôt: 20.12.1989
(51) Int. Cl.: G06K 19/06

(54) **Dispositif de protection d'une carte électronique et utilisation pour protéger un terminal de lecture de carte magnétique et/ou à microprocesseur**
Schutzvorrichtung für eine elektronische Karte und Verwendung zum Schutz eines Abtastterminals für eine Magnet- und/oder Mikroprozessor-Karte
Device to protect an electronic card and its use to protect a reading terminal of a magnetic and/or microprocessor card

(30) Priorité: 20.12.1988 FR 8816787
(43) Date de publication de la demande: 27.06.1990
(73) Titulaire: BULL S.A., 92800 Puteaux (FR)
(72) Inventeur: Verrier, Philippe, F-78560 Le Port Marly (FR); Poulenard, Roger, F-78230 Le Pecq (FR)
(74) Mandataire: Corlu, Bernard Edouard

(56) Documents cités:
- EP-A- 0 128 672
- DE-A- 2 352 136
- FR-A- 2 580 834
- FR-A- 2 596 176
- US-A- 4 360 727

## Description

La présente invention concerne un dispositif de protection d'une carte électronique et son utilisation pour protéger l'électronique d'un terminal de lecture de carte magnétique et/ou à microprocesseur.

Dans une carte électronique comportant sur un circuit imprimé un microprocesseur et des mémoires destinées à contenir des informations confidentielles, que l'on ne souhaite pas accessibles à un fraudeur, il est nécessaire de protéger l'accès à ces mémoires par des moyens physiques. Toutefois, ces protections d'accès par des moyens physiques peuvent être contournées par des moyens destructifs de la protection sans endommager les mémoires et le contenu de celles-ci. Il est donc nécessaire d'empêcher autant que possible l'utilisation de ces moyens destructifs. De même, si avant de débrancher une mémoire de son alimentation, on a suffisamment abaissé la température environnante, cette mémoire va conserver le contenu de ces informations même après la coupure de l'alimentation.

Un premier but de l'invention est donc de proposer un dispositif de protection physique d'une carte électronique à mémoire volatile.

Ce but est atteint par le fait que le dispositif comprend un réseau résistif noyé dans de la résine et entourant la carte électronique, le réseau résistif étant incorporé dans un circuit électronique de détection des modifications de la résistance du réseau pour provoquer une destruction de l'information des mémoires volatiles.

Selon une autre caractéristique, le circuit de détection des modifications de la résistance du réseau est constitué d'un pont de résistance branché aux bornes d'un comparateur.

L'autre but de l'invention est de proposer un dispositif de protection permettant de détecter les tentatives de destruction de la protection physique ou de conservation des informations contenues dans la mémoire par abaissement de la température.

Ce but est atteint par le fait que le dispositif comporte en outre des moyens de détection de la température du circuit électronique et des moyens de provoquer la destruction des informations de la mémoire volatile lorsqu'un seuil bas de température, ou un seuil haut de température, est franchi.

Selon une autre caractéristique, les moyens de détection de la température sont constitués par une thermistance montée dans un pont de résistance, branchée aux bornes d'un comparateur à fenêtre.

Un troisième but est de proposer un dispositif permettant de détecter l'ouverture du boîtier pour prévenir une agression physique.

Ce troisième but est atteint par le fait que ce dispositif comporte des moyens de détection de l'ouverture du boîtier pour provoquer la destruction des informations de la mémoire volatile.

Selon une autre caractéristique, les moyens de détection de l'ouverture sont un interrupteur à lame souple fixé sur une moitié du boîtier et commandé par un aimant monté adjacent sur la deuxième moitié du boîtier.

Selon une autre caractéristique, la sortie des moyens de détection de température, les modifications de la résistance du réseau et de l'ouverture du boîtier sont envoyés à travers une porte ET sur une bascule dont la sortie commande un interrupteur électronique coupant l'alimentation des mémoires volatiles.

Un autre but de l'invention est d'utiliser le dispositif ci-dessus pour protéger l'électronique d'un terminal pour cartes magnétiques et/ou un microprocesseur.

Ce but est atteint par le fait que le terminal est associé avec un dispositif décrit ci-dessus et comporte en outre un dispositif d'affichage visuel, un lecteur de piste magnétique et/ou un lecteur de circuit à microprocesseur, un clavier et au moins une liaison de communication, soit avec un autre équipement, soit avec un réseau.

FR- A - 2 596 176 décrit un dispositif correspondant au préambule de la revendication 1 et comportant des moyens de détection de l'ouverture du boîtier provoquant l'arrêt de l'alimentation de la mémoire vive. Il est par ailleurs connu de FR- A - 2 580 834 de protéger l'utilisation d'une carte à mémoire par un réseau résistif entourant le circuit et en détectant les modifications de la résistance du réseau.

La présente invention est définie par les revendications attenantes.

D'autres caractéristiques et avantages de la présente invention apparaîtront plus clairement à la lecture de la description ci-après faite en référence aux dessins annexés dans lesquels :
- la figure 1 représente une vue schématique en coupe du dispositif de protection physique d'une carte électronique ;
- la figure 2 représente le schéma des éléments fonctionnels du terminal ;
- la figure 3 représente le schéma électronique du dispositif de protection d'un circuit électronique à mémoire volatile.

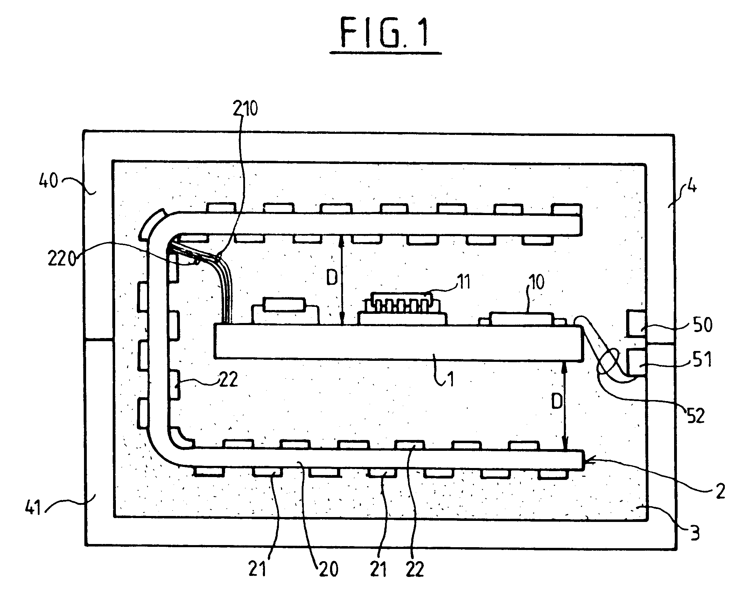

Une carte (1) comportant un ensemble de circuits électroniques (10, 11) est entourée d'un réseau résistif (2) constitué par un film en polycarbonate (20) sur chacune des faces duquel un film de carbone (21, 22) est sérigraphié. Comme on peut le remarquer à la figure 1, les pistes de carbone (22) sur une face du film (20) en polycarbonate sont décalées par rapport aux pistes (21) de l'autre face du film support (20).

L'ensemble de ces réseaux de film de carbone (22) et (21) disposé sur chacune des faces constituent respectivement une résistance (R1) et une deuxième résistance (R2) qui sont reliées au circuit électronique de la carte (1) par une liaison (220) et respectivement une liaison (210). L'ensemble carte électronique (1) et réseau de résistance (2) est noyé dans de la résine en polyuréthanne. Cette résine reste à l'état solide jusqu'à une température d'environ 100°C. La distance D entre les faces du réseau de résistance et le circuit imprimé constituant la carte électronique est suffisamment réduite pour éviter qu'une sonde d'appareil de mesure puisse être glissée entre le réseau de résistance (2) et la carte de circuit électronique (1) par les faces où la carte n'est pas entourée, puisque le réseau de résistance (2) a une section transversale en forme de U.

Dans une forme de réalisation améliorée, on pourrait envisager d'entourer la carte de quatre réseaux de résistance disposés de façon à ce qu'aucun intervalle ouvert ne permette l'accès à la carte électronique (1).

Le bloc de résine (3) est ensuite enfermé dans un boîtier (4) constitué de deux demi coquilles (40, 41) dont une première comporte à proximité de la surface de séparation un aimant (50), et la seconde (41) comporte de façon adjacente à la surface de séparation, un interrupteur à lame souple (51) qui est relié par les fils (52) au circuit électronique de la carte (1).

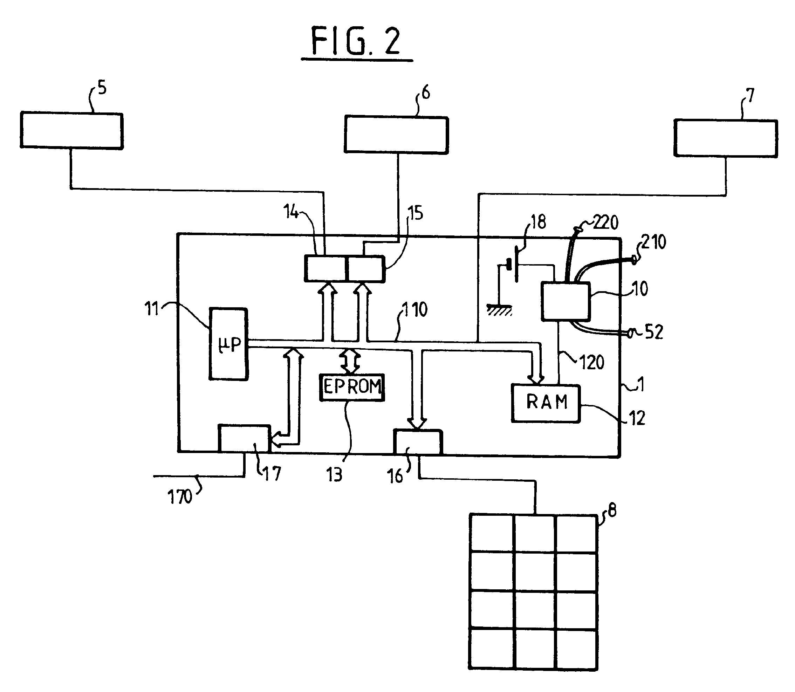

La figure 2 représente une application intéressante du principe de l'invention selon la figure 1, notamment pour protéger un terminal lecteur de cartes de crédit. Ce terminal lecteur de cartes de crédit représenté à la figure 2 comporte un lecteur de piste magnétique (6) relié par un circuit d'interface (15) à un bus (110) auquel est connecté un microprocesseur (11). Un deuxième lecteur (5) est adapté pour la lecture de cartes de crédit, comportant en plus de la piste magnétique, un circuit intégré à un microprocesseur autoprogrammable. Ce lecteur (5) est relié par une deuxième interface (14) au bus (110). Un dispositif d'affichage (7) constitué, par exemple, de diodes électroluminescentes est également relié au bus (110). Une mémoire vive volatile (12) est reliée également au bus (110). Cette mémoire vive (12) (RAM) est transformée en mémoire non volatile par une batterie (18) ou une pile au lithium qui permet d'assurer l'alimentation de la mémoire volatile même en cas de coupure d'une alimentation principale ou auxiliaire. Cette alimentation (18) de la mémoire vive est transmise par un circuit électronique (10) de détection des tentatives de fraude ; ce circuit électronique (10) est relié par les fils (220, 210 et 52) aux résistances de la figure 1 et à l'interrupteur à lame souple (51). De même, un clavier (8) est connecté, par l'intermédiaire d'un circuit d'interface (16), au bus (110). Enfin, une mémoire morte programmable, du type EPROM, est connectée au bus (110). Le terminal comporte également un circuit d'interface (17) permettant de réaliser une liaison du type (RS232) ou un réseau local.

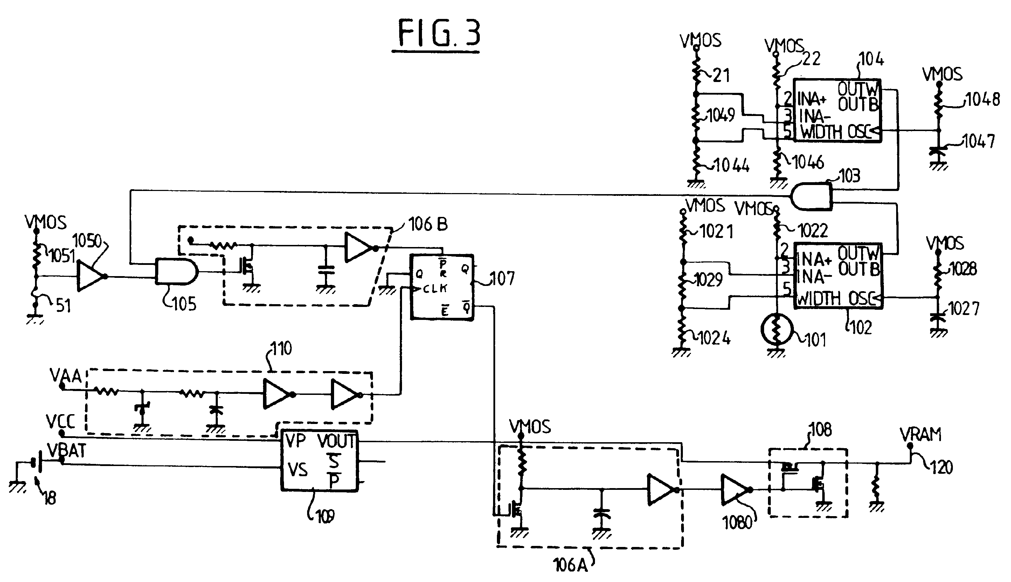

Le circuit électronique (10) de protection de la carte (1) contre la fraude est représenté à la figure 3. Cette électronique comporte une thermistance (101) montée dans un pont constitué par les résistances (1022, 1021, 1024 et 1029). Le pont est branché à l'entrée d'un comparateur à fenêtre (102) qui reçoit sur son entrée d'horloge (OSC) le signal fourni par un générateur d'impulsion constitué par le point commun d'une résistance (1028) et d'un condensateur (1022) reliés en série entre la masse et une tension d'alimentation. La sortie du comparateur (102) est envoyée sur une première entrée d'une porte ET(103). La deuxième entrée de cette porte ET(103) reçoit la sortie d'un deuxième comparateur (104) à fenêtre, recevant sur son entrée impulsionnelle le signal délivré par le point commun à une résistance (1048) et un condensateur (1047) branchés en série entre la tension d'alimentation et la masse. Ce comparateur (104) est branché à un pont de résistance constitué, d'une part par les résistances (21, 22) du réseau entourant le circuit, et d'autre part par les résistances (1046, 1044 et 1049). La sortie de la porte ET(103) est envoyée sur une première entrée d'une deuxième porte ET(105) dont une deuxième entrée reçoit la sortie d'un inverseur (1050). Cet inverseur (1050) a son entrée reliée au point commun entre une résistance (1051) et l'interrupteur à lame souple (51) branchés en série entre la tension d'alimentation et la masse. La sortie de la porte ET(105) est envoyée à travers un filtre (106B) vers une bascule (107) dont l'entrée d'horloge (CLK) reçoit la sortie d'un oscillateur (110). La sortie /Q de la bascule (107) est envoyée sur un deuxième filtre (106A) dont la sortie est reliée à un inverseur (1080). La sortie de cet inverseur commande un circuit interrupteur électronique (108) permettant de couper la sortie (120) qui alimente les mémoires volatiles (12) de la carte (1). L'alimentation pour ces mémoires est fournie par un circuit (109) de commutation d'alimentation permettant de commuter automatiquement l'alimentation du terminal sur une alimentation fournie par la pile lithium (18) branchée sur l'entrée (VS) du circuit (109).

En fonctionnement, la thermistance (101) associée avec le comparateur (102) permet de détecter le dépassement des deux seuils de température de - 30°C et + 100°C. Celui de - 30°C permet d'éviter qu'en abaissant la température du circuit électronique, on puisse débrancher la batterie sans perdre l'information contenue dans les mémoires vives (12). Ceci permettrait à un fraudeur d'accéder aux informations contenues par ces mémoires vives (12) et constituées par les clés des clients ayant utilisé leurs cartes. De même, le seuil de + 100°C permet de détecter une tentative de faire fondre la résine (3) en vue d'accéder aux informations contenues dans la mémoire vive. Dans les deux cas où l'un de ces seuils de température est franchi, le circuit interrompt l'alimentation de la mémoire vive (RAM) et provoque de cette façon la destruction des informations contenues dans celle-ci.

De même, une tentative de perçage du réseau de résistance (21, 22) est décelée par la variation correspondante des résistances (21, 22) détectée par le comparateur (104) dont la sortie commande l'interruption de l'alimentation de la mémoire (12). Ceci permet d'éviter le percement d'un canal pour introduire une sonde de mesures, et ensuite, prélever les informations contenues dans la mémoire. Enfin, l'ouverture du boîtier du terminal étant détectée par l'interrupteur à lame souple (51) dont le contact se ferme dès que l'aimant (50) est éloigné de cet interrupteur. Cet état de fait est détecté par l'inverseur (1050) et transmis par la porte ET(105) à la bascule (107) dont la sortie commande l'interruption de l'alimentation de la mémoire vive (12). La bascule (107) permet de mémoriser l'un des trois états de détection dès que l'une de ces trois conditions, ou les deux ou trois conditions, apparaissent en même temps.

De cette façon, on a réalisé un dispositif de protection de circuit électronique et utilisé ce dispositif de protection pour protéger les informations contenues dans un terminal adapté à fonctionner avec des cartes bancaires, soit à pistes magnétiques, soit mixtes, c'est-à-dire à pistes magnétiques et à microprocesseur, soit uniquement à microprocesseur.

## Revendications

1. Dispositif de protection d'une carte comprenant, sur un circuit imprimé, un circuit électronique à mémoire volatile (12) contenant des programmes ou informations à protéger et noyé dans la résine (3), ce dispositif comprenant des moyens de détection pour détecter une tentative d'accès audit circuit à mémoire volatile et provoquer une destruction desdites informations,
caractérisé en ce que lesdits moyens de détection comprennent un réseau résistif (21,22) présentant une résistance déterminée et entourant le circuit à mémoire volatile, et un circuit électronique de détection des modifications éventuelles de ladite résistance pour provoquer la destruction des informations en cas d'apparition des dites modifications, ledit circuit de détection incluant un comparateur à fenêtre (104).

2. Dispositif selon la revendication 1, caractérisé en ce que ledit circuit de détection de résistance comprend un pont de résistances (21, 22, 1046,1044, 1049) incluant ledit réseau résistif (21, 22) et branché à des bornes d'entrée dudit comparateur.

3. Dispositif selon la revendication 1, caractérisé en ce qu'il comporte des moyens de détection (101) de la température associés au circuit de détection de résistance (10) et des moyens (107, 108) pour provoquer la destruction des informations de la mémoire volatile (12) lorsqu'un seuil bas de température, ou un seuil haut de température, est franchi.

4. Dispositif selon la revendication 3, caractérisé en ce que les moyens de détection (101) de la température sont constitués par une thermistance (101) montée dans un pont de résistances (1022, 1021, 1024) branché aux bornes d'un comparateur (102) à fenêtre.

5. Dispositif selon l'une quelconque des revendications précédentes, caractérisé en ce qu'il comporte des moyens (50, 51) de détection de l'ouverture du boîtier pour provoquer la destruction des informations de la mémoire volatile (12) en cas d'ouverture.

6. Dispositif selon la revendication 5, caractérisé en ce que les moyens (50, 51) de détection de l'ouverture comprennent un interrupteur à lame souple (51) fixé sur une première moitié (41) du boîtier et commandé par un aimant (50) monté adjacent sur une deuxième moitié (40) du boîtier.

7. Dispositif selon l'une quelconque des revendications 3 à 6, caractérisé en ce que des signaux de sortie des moyens de détection de température (101, 102), des moyens de détection de résistance (104) et des moyens de détection de l'ouverture du boîtier (1050) sont envoyés à travers une porte ET(103, 105) sur une bascule (107) dont la sortie commande un interrupteur (108) électronique, ledit interrupteur étant apte à interrompre l'alimentation de la mémoire volatile.

8. Utilisation du dispositif selon une des revendications précédentes pour protéger l'électronique d'un terminal pour cartes magnétiques et/ou à microprocesseur, comportant une unité centrale (11) associée avec des mémoires vives (12).

9. Utilisation selon la revendication 8, caractérisée en ce que le terminal comporte un dispositif d'affichage (7), un lecteur de piste magnétique (6) et/ou un lecteur (5) de carte à microprocesseur, et un clavier (8).

10. Utilisation selon la revendication 9, caractérisé en ce que le terminal comporte un circuit de communication (17).

## Patentansprüche

1. Schutzvorrichtung für eine Karte, die auf einer gedruckten Schaltung eine elektronische Schaltung mit flüchtigem Speicher (12) aufweist, der Programme oder zu schützende Informationen enthält und in das Harz (3) eingelassen ist, wobei diese Vorrichtung Erfassungsmittel enthält, um einen Versuch eines Zugriffs auf die Schaltung mit flüchtigem Speicher zu erfassen und eine Zerstörung der Informationen zu bewirken,
dadurch gekennzeichnet, daß die Erfassungsmittel ein Widerstandsnetz (21, 22) enthalten, das einen bestimmten Widerstand aufweist und die Schaltung mit flüchtigem Speicher umgibt, sowie eine elektronische Schaltung zum Erfassen eventueller Änderungen des Widerstandes, um die Zerstörung der Informationen im Fall des Auftretens der Änderungen zu bewirken, wobei die Erfassungsschaltung einen Fensterkomparator (104) einschließt.

2. Vorrichtung nach Anspruch 1, dadurch gekennzeichnet, daß die Widerstandserfassungsschaltung eine Widerstandsbrücke (21, 22, 1046, 1044, 1049) enthält, die das Widerstandsnetz (21, 22) einschließt und mit den Eingangsklemmen des Komparators verbunden ist.

3. Vorrichtung nach Anspruch 1, dadurch gekennzeichnet, daß sie der Widerstandserfassungsschaltung (10) zugeordnete Mittel (101) zum Erfassen der Temperatur und Mittel (107, 108) enthält, um die Zerstörung der Informationen des flüchtigen Speichers (12) zu bewirken, wenn eine untere Temperaturschwelle oder eine obere Temperaturschwelle überschritten wird.

4. Vorrichtung nach Anspruch 3, dadurch gekennzeichnet, daß die Mittel (101) zum Erfassen der Temperatur durch einen Thermistor (101) gebildet sind, der in einer Widerstandsbrücke (1022, 1021, 1024) angebracht ist, die mit den Klemmen eines Fensterkomparators (102) verbunden ist.

5. Vorrichtung nach einem der vorhergehenden Ansprüche, dadurch gekennzeichnet, daß sie Mittel (50, 51) zum Erfassen des Öffnens des Gehäuses enthält, um die Zerstörung der Informationen des flüchtigen Speichers (12) im Fall eines Öffnens zu bewirken.

6. Vorrichtung nach Anspruch 5, dadurch gekennzeichnet, daß die Mittel (50, 51) zum Erfassen des Öffnens einen Lamellenschalter (51) enthalten, der an einer ersten Hälfte (41) des Gehäuses befestigt und durch einen Magneten (50) gesteuert ist, der angrenzend an eine zweite Hälfte (40) des Gehäuses angebracht ist.

7. Vorrichtung nach einem der Ansprüche 3 bis 6, dadurch gekennzeichnet, daß die Ausgangssignale der Temperaturerfassungsmittel (101, 102), der Widerstandserfassungsmittel (104) und der Mittel (1050) zum Erfassen des Öffnens des Gehäuses über eine UND-Schaltung (103, 105) an eine Kippschaltung (107) geliefert werden, deren Ausgangssignal einen elektronischen Schalter (108) steuert, wobei der Schalter imstande ist, die Versorgung des flüchtigen Speichers zu unterbrechen.

8. Verwendung der Vorrichtung gemäß einem der vorhergehenden Ansprüche zum Schutz der Elektronik eines Terminals für Magnet- und/oder Mikroprozessor-Karten, mit einer Zentraleinheit (11), der Schreib-Lese-Speicher (12) zugeordnet sind.

9. Verwendung nach Anspruch 8, dadurch gekennzeichnet, daß das Terminal eine Anzeigevorrichtung (7), einen Magnetspurleser (6) und/oder einen Leser (5) für Mikroprozessorkarten und einen Tastatur (8) enthält.

10. Verwendung nach Anspruch 9, dadurch gekennzeichnet, daß das Terminal eine Kommunikationsschaltung (17) enthält.

## Claims

1. Device for protecting a card comprising, on a printed circuit, an electronic volatile memory circuit (12) containing programs or information to be protected and embedded in resin (3), this device comprising detection means for detecting an attempt to access said volatile memory circuit and causing a destruction of said information characterised in that said detection means comprise a resistive network (21,22) having a given resistance and surrounding the volatile memory circuit, and an electronic circuit for detecting possible alterations of said resistance in order to cause the destruction of said information in the case when said alterations are apparent, said detection circuit induding a window comparator.

2. Device according to claim 1, characterised in that said resistance detection circuit comprises a resistor bridge (21,22,1046,1044,1049) including said resistive network (21,22) and connected to input terminals of said comparator.

3. Device according to daim 1, characterised in that it comprises means (101) for detecting the temperature associated with the resistance detection circuit (10) and means (107,108) for causing the destruction of the data of the volatile memory (12) when a low temperature threshold or a high temperature threshold is crossed.

4. Device according to claim 3, characterised in that the temperature detection means (101) are constituted by a thermistor (101) mounted in a resistor bridge (1022,1021,1024) connected to the terminals of a window comparator (102).

5. Device according to any one of the preceding claims, characterised in that it comprises means (50,51) for detecting opening of the casing in order to cause the destruction of the information of the volatile memory (12) in care of opening.

6. Device according to claim 5, characterised in that the means (50,51) for detecting opening comprise a switch with a flexible blade (51) fixed on a first half (41) of the casing and controlled by a magnet (50) mounted adjacently on a second half (40) of the casing.

7. Device according to any one of claims 3 to 6, characterised in that the output signals of the temperature detection means, of the resistance detection means (104) and of the means for detecting opening of the caring (1050) are sent via an AND gate (103,105) to a multivibrator (107) the output of which controls an electronic switch (108), said switch being capable of interrupting the supply of the volatile memory.

8. Use of a device according to one of the preceding claims for protecting the electronics of a terminal for magnetic and/or microprocessor cards, comprising a central unit (11) associated with random access memories(12).

9. Use according to claim 8, characterized in that the terminal comprises a display device (7), a magnetic track reader (6) and/or a microprocessor card reader (7), and a keyboard.

10. Use according to claim 9, characterised in that the terminal comprises a communication circuit (17).
